# EUROPEAN PATENT APPLICATION

(11) **EP 1 113 552 A1**
(43) Date of publication of application: **04.07.2001**
(21) Application number: 00830290.3
(22) Date of filing: 17.04.2000
(51) Int. Cl.: H02G 3/04

(54) **Cable channel with inwardly projecting parts for passing through ties**

(30) Priority: 28.12.1999 IT FI990138 U
(71) Applicant: K 2000 S.R.L., 50015 Bagno a Ripoli (Firenze) (IT)
(72) Inventor: Tassi, Fernando, 50012 Bagno A Ripoli (Firenze) (IT)
(74) Representative: Martini, Lazzaro

(57) **Abstract**

Channel-like structure with a base body (1) and a cover associable to said base body to delimit a seat able to receive cables, wires, tubes, ducts and the like. The structure is provided, in correspondence of the bottom (3) of said body (1), and/or of one or more walls (4) of the same body and of the cover (40), with one or more elements (6) which delimit one or more corresponding ports (60) for the passage and anchorage of tie elements intended to fasten said cables, wires, ducts, tubes and the like to each other and to the same structure.

## Description

The present invention refers to a channel-like structure.

Channel-like structures are known for use, connected between them and/or to fitting elements, in the formation of channels suitable for housing electrical and telephone cables, lines of telematic networks, as well as hydraulic tubes or ducts, and for gas or compressed air. The said structures comprise a base body, which makes up the proper seat, as well as a cover for closing said seat. Generally, the cover is made to hook, by slightly forcing it into a snap-engagement, onto the longitudinal edges of the base body.

The structures in question are wall-mounted or fixed to other suitable support structure, by means of screw fastening members going through corresponding holes provided on the bottom of said base body, that is, on the side to be put in contact with the support structure.

In most cases, the need arises for securing to each other and to the channel-like structure, the cables or tubes received therein. To this end, use is made of clamps, laces or other fastening elements.

At present, it is necessary to introduce the clamps (or the other means used for fastening the cables) through holes provided in the bottom of the base body. This operation must be carried out before fixing the latter to the relevant support, since, otherwise, the holes would result occluded, and thus unserviceable, owing to the contact of said fastening means with the wall or other intended suface. This causes a lenthening of the operations for the fastening the base body to the wall, owing to the need of fixing beforehand the clamps at predetermined locations. This results also in a greater complexity of the operation for fastening the channel to the wall, since the base body is no longer a single body but is instead associated to a plurality of clamps or laces. Moreover, with this procedure it is necessary to know in advance the more suitable locations at which the cables must be fastened, as it is not possible to add or move any clamp after having fixed the base body to the intended wall.

The main object of the present invention is to overcome the said drawbacks.

This result has been achieved, according to the invention, by providing a channel-like structure having the characteristics indicated in the claim 1. Further characteristics being set forth in the dependent claims.

The advantages deriving from the present invention lie essentially in that it is possible to fix the channel-like structures to the wall or other support structure without having necessarily to plan beforehand the locations where the clamps or other means intended to fasten the cables or tubes seated therein, are to be inserted; that the times for mounting the channel-like structures are reduced; that it is possible to carry out, also in different times, the wall-mounting of the channel-like structures and the fitting of the clamps at the hooking sites; that a channel-like structure in compliance with the invention is simple to make, of relatively low cost and able to maintain its characteristics unchanged in the long run.

These and other advantages and characteristics of the invention will be best understood by anyone skilled in the art from a reading of the following description in conjunction with the attached drawings given as a practical exemplification of the invention, but not to be considered in a limitative sense, wherein:
- Figs. 1 and 2 show in perspective view from top and bottom, respectively, a longitudinal portion of a possible embodiment of the invention;
- Figs. 3, 4 and 5 refer to a further embodiment as viewed, respectively, fom top, in longitudinal section (taken along line B-B) and in a cross-section (on line A-A) ;
- Figs. 6, 7, 8, 9 and 10 are perspective views of longitudinal portions of further five possible embodiments of the invention;
- Fig. 11 shows a perspective view of a further possible embodiment of the invention according to which the elements for anchoring the cables and ducts fastening means are provided in correspondence of the cover;

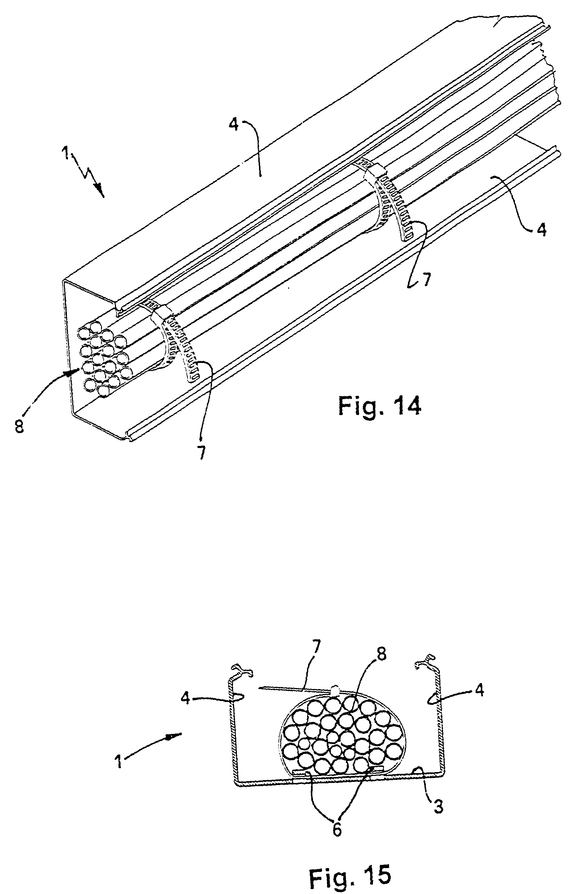

- Figs. 12, 13, 14 and 15 show two possible examples of utilization of the structure according to the invention.

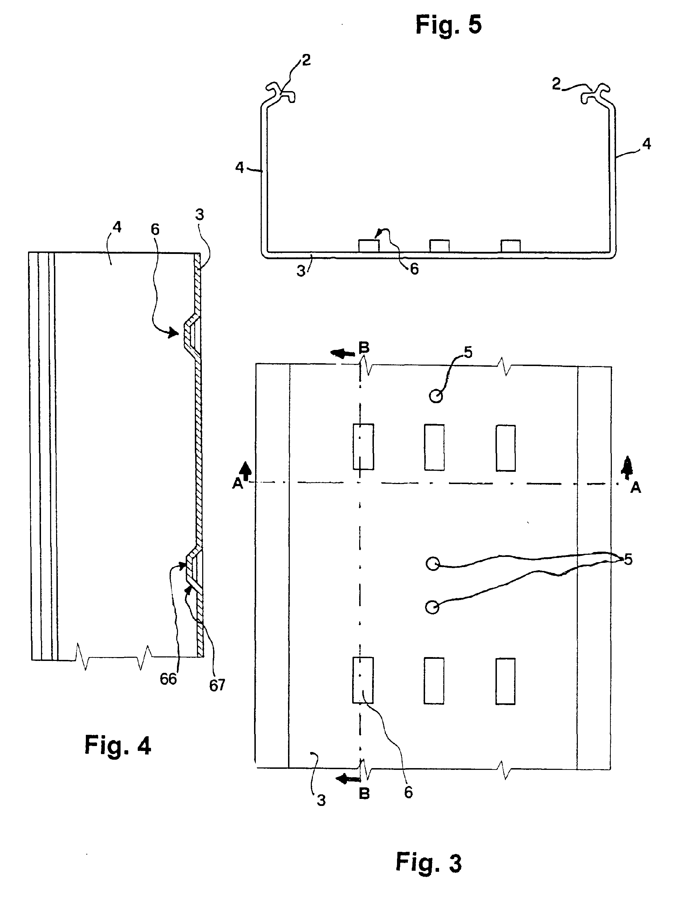

A channel-like structure according to the invention comprises at least a base body (1), with a bottom (3), whose outer face is to be come in contact with a support structure, and two walls (4) parallel to each other and substantially orthogonal to the bottom (3) from which they develop without solution of continuity. The longitudinal, free edge (2) of the walls (4) has a profile suited for snapengaging, for example, with a slight elastic straining, by a closing cover whose longitudinal edges are correspondingly shaped. The said base body (1), in cooperation with the cover, delimits a space closed on four sides and providing seat for such elements as cables or ducts for electrical, telephone or telematic networks, hydraulic, gas or compressed-air systems, etc. A plurality of bodies (1) of the type above described, arranged head-to-head and/or fitted with curved elements so as to form channels of whatever length and development. Each body (1) is provided with through holes (5) (shown only in Fig. 3) formed in correspondence of the bottom (3) to allow the fixing of the latter onto panels, walls or machine parts and devices of various kind by means, for example, of expansion screws and plugs. Both the body (1) with bottom (3) and walls (4), and the cover are made, for example, in plastics or metal plate material, according to the type of services that the elements housed therein are intended for: electrical, hydraulic, pneumatic services, etc.

As best described herebelow with reference to the exemplary embodiments shown in the drawings, a channel-like structure according to the present invention exhibits at least a portion protruding inwardly of the structure for defining a corresponding port (60) allowing the passage of clamps (7) therethrough, laces and similar members intended for fastening cables (8), ducts or tubes (9) already housed, or to be housed, within the structure.

With reference to the examples of the attached drawings, at a least one portion is provided bridge-like (6) projecting on the inner side or bottom (3) of the body (1), that is, on the side opposite to the cover and/or on the inner side of the latter and/or on one or both the walls (4) on the edge of which the cover is applied. The said bridge-like element (6) is formed by a flat part (66), parallel to the surface of the bottom (3) (or of the cover 40 or of the wall 4) and by two connecting parts (67) which, by joining said flat part (66), make up the bridge (6), that is, define a port (60) which faces the surface of the bottom (3) (or of the cover 40 or of the wall 4). The height of the bridge (6), that is, of the port (60), is chosen so as to engage fastening members readily available on the market, such as clamps, laces, etc.
Through the port (60), clamps or laces and the like may be passed to allow cables (or tubes or ducts, etc.) to be fixed to each other or to the base body (1) also when the latter is already fixed to the relevant support structure, the latter consisting of a wall, a machine part, a panel, etc.

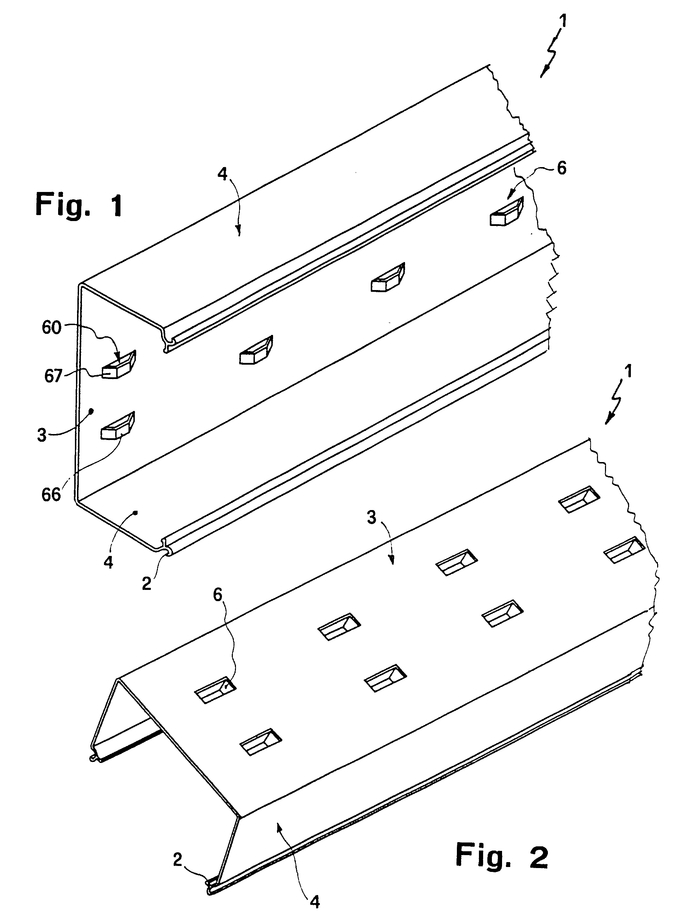

The number, shape and disposition of the bridges (6) may vary at will.
By way of example, in the embodiments of Figs. 1 and 2, the said bridges (6) are disposed on two parallel rows along the longitudinal development of the base body (1). In this embodiment, the bridges exhibit one central portion (66), parallel to the direction of longitudinal development of body (1) and two connecting portions (67) which branch out of the bottom (3) to meet at said central portion (66). In the examples of Figs. 3-5, the bridges (6) exhibit substantially the same shape as those of the preceding figures, but are disposed on three rows.

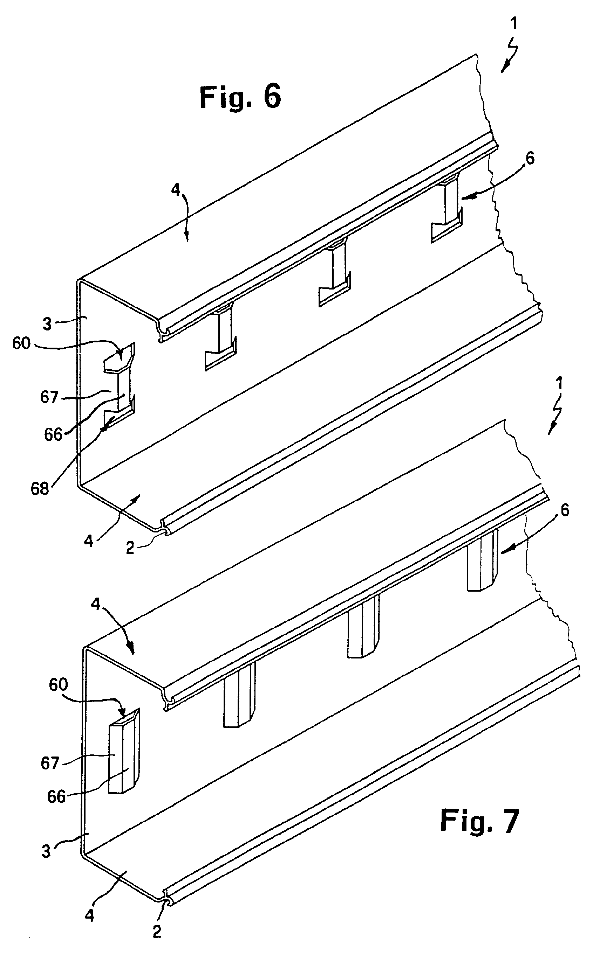

In the example of Fig. 6, the bridges (6) have the central portion (66) disposed at right angle to the longitudinal development of the body (1) and extending by a length lower than the relevant aperture (68) exhibited by the bottom (3) on the side opposite to same portion (66).

In the example of Fig. 7, the bridges (6), similarly to the preceding example, have the central portion (66) disposed at right angle to the longitudinal development of the body (1); in this case, however, the central portion (66) extends by a length equal to the corresponding aperture exhibited by the bottom (3).

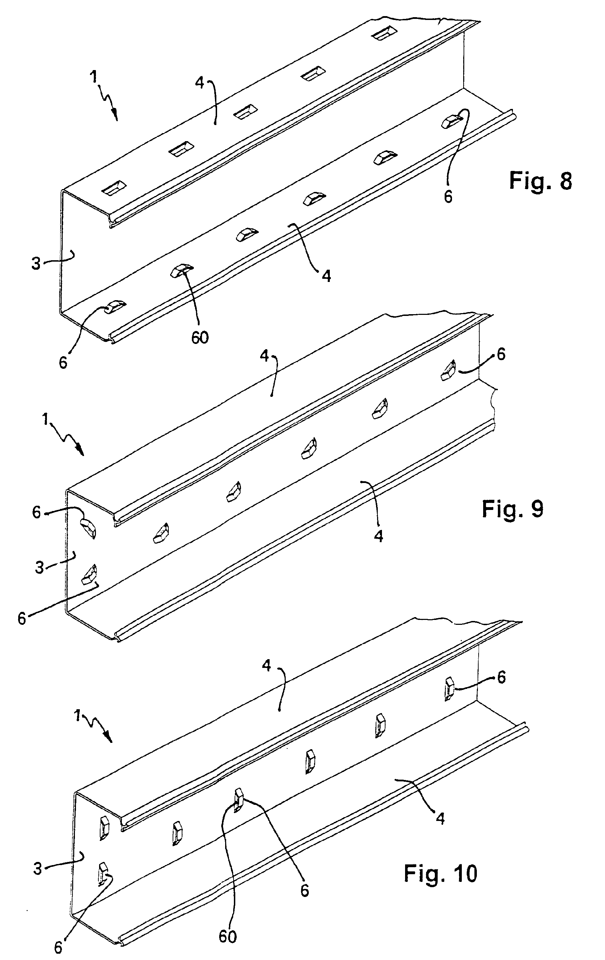

In the example of Fig. 8, the elements (6) intended to anchor the fastening means are provided in correspondence of the walls (4) of body (1), on the side facing inwardly thereof.
In the example of Fig. 9, the elements (6) are in correspondence of the bottom (3) and so disposed as to result oriented, that is, converging, towards the longitudinal axis of the body (1) .

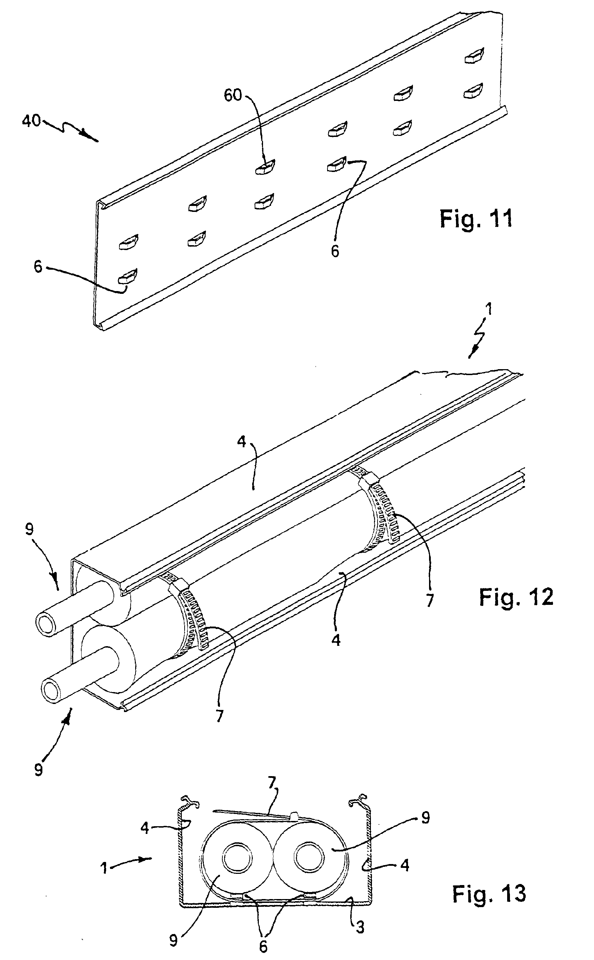

In the example of Fig. 10, the elements (6) are in correspondence of the bottom (3) and developed orthogonally to the longitudinal axis of body (1).
In the example of Fig. 11, the elements (6) are in correspondence of cover (40), that is; on the side thereof which, upon the operating condition of the structure, is opposite to bottom (3) of body (1).

It is understood that a channel-like structure according to the present invention may exhibit one or more of said elements (6), in correspondence of the bottom (3) and/or of walls (4) of body (1) and/or of cover (40).
It is also understood that said elements (6) may be developed on the external rather than internal side of one or both the walls of the body (1) and/or of the cover (40), which allows for achieving the intended purpose all the same.

In addition, the profile of the bridge (6) may be more or less rounded. In other words, the bridge (6) may have a polygonal section such as in the example, or circular, semicircular, or of other type. Also the "closed bridge" shape is not the only one possibly exibiting the protruding portion allowing the clamps to be fixed; the protruding portion (6) may be also open on one side, thus resulting closed on two sides instead of three, that is, taking up the shape of a hook and allowing, anyhow, the fastening by means of clamps, laces and the like.

The ports (60) provided by the elements (6) can also be used for the snap-hooking thereof onto the correspondlingly shaped feet of such accessories as wiring boxes and the like to be disposed inside the channels.
The said elements (6) may be formed, for example, by suitably punching them out of the body (1) and/or of the cover (40) at predetermined locations.
As an alternative, said elements (6) may be applied, as bodies separated from the body (1) and/or of cover (40) , in correspondence of apertures provided on the body (1) and/or cover (40) at points suitably selected: said elements (6) being possibly fixed by glueing, snap engagement, use of member such as screws and the like and in any other suitable manner.

## Claims

1. Channel-like structure with a base body (1) and a cover associable to said base body to delimit a seat able to receive cables, wires, tubes, ducts and the like, characterized in that it is is provided, in correspondence of the bottom (3) of said body (1), and/or of one or more walls (4) of the same body and of the cover (40), with one or more elements (6) which delimit one or more corresponding ports (60) for the passage and anchorage of tie elements intended to fasten said cables, wires, ducts, tubes and the like to each other and to the same structure.

2. Channel-like structure according to claim 1,
characterized in that at least one element (6) is substantially bridge-shaped by projecting inwardly of the structure.

3. Channel-like structure according to claim 1,
characterized in that said at least one element (6) has a central portion (66) parallel to the direction of longitudinal development of said base body (1).

4. Channel-like structure according to claim 1,
characterized in that said at least one element (6) has a central portion (66) oriented towards the longitudinal axis of said base body (1).

5. Channel-like structure according to claim 1,
characterized in that said at least one element (6) has has a polygonal profile.

6. Channel-like structure according to claim 1,
characterized in that said at least one element (6) has a substantially curvilinear or semicircular profile.

7. Channel-like structure according to any of the preceding claims, characterized in that said at least one element (6) has a shape substantially closed on three sides.

8. Channel-like structure according to any of claims 1 to 6, characterized in that said at least one element (6) has a shape substantially closed on two sides.

9. Channel-like structure according to claim 1,
characterized in that said at least one element (6) has a substantially bridge-like shape, projecting outwardly of the structure, and is provided on one or both the walls (4) of the body (1) and/or of the cover (40).
